Europäisches Patentamt

**European Patent Office**

**Office européen des brevets**

(11) Numéro de publication: **0 309 845 B1**

(12) **FASCICULE DE BREVET EUROPEEN**

(45) Date de publication de fascicule du brevet: **22.04.92** (51) Int. Cl.⁵: **G02B 26/08**

(21) Numéro de dépôt: **88115309.2**

(22) Date de dépôt: **19.09.88**

(54) **Système de poursuite d'une cible.**

(30) Priorité: **29.09.87 LU 87003**

(43) Date de publication de la demande:
**05.04.89 Bulletin 89/14**

(45) Mention de la délivrance du brevet:
**22.04.92 Bulletin 92/17**

(84) Etats contractants désignés:
**BE DE ES FR GB GR IT LU NL**

(56) Documents cités:
**DE-A- 3 425 805**

(73) Titulaire: **COMMUNAUTE ECONOMIOUE EURO-PEENNE (CEE)**
**Bâtiment Jean Monnet Plateau du Kirchberg**
**L-2920 Luxembourg(LU)**

(72) Inventeur: **Parker, Graham Alexander, Prof.**
**Tall Chimneys West Clandon**
**Guildford Surrey GU4 7UG(GB)**
Inventeur: **Mayer, Rene Joseph Raymond**
**670, Rose-Delima**
**St-V-P Laval Ouébec, H7E 255(CA)**
Inventeur: **Taylor, Ian George**
**21 Surman Crescent Hutton**
**Brentwood Essex CM13 2PP(GB)**
Inventeur: **Bailey, David George**
**52, Recreation Road**
**Guildford Surrey(GB)**

(74) Mandataire: **Weinmiller, Jürgen**
**Lennéstrasse 9 Postfach 24**
**W-8133 Feldafing(DE)**

Rank Xerox (UK) Business Services

## Description

L'invention concerne un système de poursuite d'une cible, comprenant deux sous-systèmes identiques, fixes et distancés, chaque système comportant une source laser et deux miroirs à pivotement orthogonal de telle sorte qu'un faisceau laser puisse être dirigé par chaque sous-système vers cette cible en mouvement, comportant en outre chacun un détecteur sensible à la lumière laser et recevant le faisceau de lumière après réflexion sur la cible, cette dernière étant une cible réfléchissante du type oeil de chat, la position de pivotement des miroirs étant ajustable sous contrôle de signaux dérivés du détecteur respectif, tel que le faisceau considéré ait tendance à s'approcher du centre de la cible et à être réfléchi sur lui-même, le système comportant en outre des moyens pour détecter la position instantanée des miroirs, et des moyens de calcul évaluant les coordonnées 3D instantanées de la cible à base des positions des miroirs. L'invention a été conçue en particulier pour mesurer à distance la position d'une tête robot en mouvement.

Un système de ce type a été décrit par exemple dans le périodique "Sensor Review", octobre 1982, pages 180 à 184. Il est basé sur une méthode de triangulation et sur la poursuite de la tête d'un bras d'un robot par deux faisceaux laser séparés. En mesurant les angles spatiaux des deux faisceaux et l'erreur de poursuite, et en connaissant la distance entre les deux sources laser, on peut calculer la position du bras du robot. La poursuite est réalisée en rétro-réfléchissant le faisceau vers le détecteur photosensible, qui, dans ce cas, est un détecteur à quatre quadrants. Les signaux électriques dérivés du détecteur de chaque sous-système sont utilisés pour corriger la direction du faisceau laser associé, de telle sorte que le faisceau a tendance à frapper exactement le miroir réfléchissant fixé à la tête du bras robot.

La performance d'un tel système dépend fortement de la précision et de la vitesse du positionnement de miroir. Si cette vitesse est faible, le faisceau frappe la cible si loin du centre que le faisceau réfléchi ne peut plus être reçu par le détecteur photosensible. La précision avec laquelle l'angle composé du faisceau peut être mesuré influence la résolution qu'on peut atteindre dans un volume de mesure donné. La résolution diminue lorsque le volume de mesure augmente.

Le système décrit dans le périodique cité ci-dessus met en oeuvre des galvanomètres du type "fer mobile" pour le pivotement, et la position actuelle du miroir est décelée par des transducteurs capacitifs de position. Des expériences ont montré que de tels moyens de pivotement souffrent de plusieurs inconvénients et réduisent ainsi la précision de mesure, la reproductibilité, la vitesse de poursuite, la stabilité de poursuite et le volume opérationnel.

Cela provient probablement des effets suivants :

a) Le miroir est monté de façon imparfaite entre des supports à roulement à billes induisant ainsi une erreur de tangage,
b) on a observé une hystérèse entre le mouvement du miroir et les signaux de commande électrique pour contrôler ce mouvement,
c) les transducteurs capacitifs n'assurent pas la précision élevée requise.

L'invention a pour but de perfectionner le système connu de poursuite de cibles de telle sorte que la précision de mesure, la vitesse de la cible et le volume de travail pour la cible puissent être augmentés sans pour autant affecter la stabilité de la poursuite.

Selon l'invention, ce but est atteint par le fait que chaque miroir de chaque sous-système est pivoté par un moteur à courant continu et sans balai et que l'arbre commun de pivotement du moteur et du miroir entraîne en plus un codeur numérique d'angle.

L'emploi d'un moteur à courant continu sans balai permet d'obtenir des mouvements reproductibles sur une zone angulaire plus grande qu'un galvanomètre du type "fer mobile", et cela sans perte de performance dynamique.

Le moteur, le miroir et le codeur sont montés sur un arbre commun qui est supporté à précision élevée par des supports à gaz. Le codeur est soit disposé près du moteur sans balai, le miroir étant alors monté sur l'arbre en porte-à-faux, ou bien le miroir est disposé entre son moteur et son codeur. Dans ce dernier cas, des supports à gaz peuvent être disposés de part et autre du miroir et assurent ainsi un montage très stable du miroir. Dans les deux cas, on obtient une bonne rigidité pour l'arbre du miroir, ce qui réduit l'erreur de tangage.

Dans les deux cas, il est utile de contrôler le moteur sans balai par des signaux numériques que sont calculés en fonction du signal de sortie du détecteur photosensible et du signal d'erreur dépendant de la différence instantanée entre la position actuelle du miroir et la position requise. Ce type de contrôle de miroir accélère le positionnement correct du faisceau laser sur la cible.

Des expériences ont montré que des détecteurs à quatre quadrants selon l'état de la technique cité exigent une expansion considérable du diamètre du faisceau pour assurer des signaux simultanés d'au moins deux quadrants du détecteur. En utilisant par contre des photodétecteurs à effet latéral à la place des détecteurs quatre quadrants, cette limitation n'est plus valable, car les photodétecteurs à effet latéral fournissent des signaux en fonction des coordonnées orthogonales du centre du faisceau incident.

Conformément à un autre perfectionnement du système selon l'invention, chaque sous-système comporte un dispositif de contrôle de mode qui sait distinguer entre au moins deux modes, à savoir un mode normal de poursuite et un mode de recherche automatique, selon lequel les miroirs sont pivotés en accord avec un programme prédéterminé, la transition entre les modes étant contrôlée par le signal de sortie du détecteur. Ainsi, le mode de recherche automatique est activé automatiquement, si la trace de ta tête a été perdue, par exemple à la suite d'un effet d'ombrage. Dès que le détecteur reçoit de nouveau de la lumière réfléchie lors du mode de recherche, le mode normal de poursuite est de nouveau activé. En outre, on a prévu des moyens pour le positionnement manuel du faisceau, nécessaire par exemple pour la calibration.

Conformément à un autre perfectionnement du système selon l'invention, il est utile de soumettre les signaux de contrôle pour le pivotement des miroirs de chaque sous-système à un dispositif de contrôle dynamique état-espace conçu pour éliminer des résonances du miroir et de ses amplificateurs de puissance.

L'invention sera décrite ci-après plus en détail à l'aide d'un exemple préféré de réalisation qui est représenté sur les figures.

Fig. 1 représente le système entier dans lequel l'invention peut être mise en valeur.

Fig. 2 montre schématiquement un sous-système du système représenté sur la fig. 1.

Fig. 3 montre un miroir du sous-système de la fig. 2 sous forme d'une variante.

Fig. 4 montre schématiquement le flux général des signaux électriques dans un sous-système tel que représenté sur la fig. 2.

Fig. 5 montre un diagramme qui se réfère au dispositif de contrôle dynamique état-espace inclus dans le système.

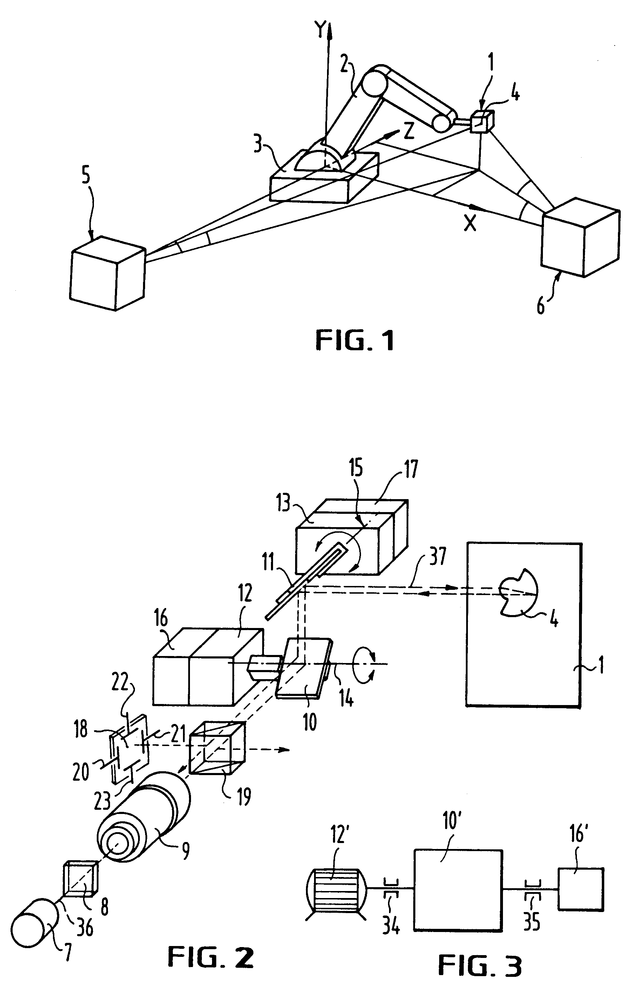

En se référant à la fig. 1, on voit un système qui est appliqué par exemple à la poursuite d'une tête 1 d'un robot 2 par rapport à un système de coordonnées 3D aux axes X, Y, Z indiqués par des flèches et associé à la base 3 du robot.

Une cible réfléchissante 4 est montée sur la tête 1 du robot. Le système comporte principalement deux sous-systèmes 5 et 6 qui sont fixes et que peuvent être divisés chacun en trois groupes correspondant aux fonctions suivantes:
a) génération d'un faisceau laser,
b) déflexion du faisceau de sorte qu'il poursuive le centre de la cible 4,
c) mesure de l'erreur de la poursuite.

La fig. 2 montre un sous-système comprenant une source laser 7 qui est polarisée linéairement et qui est suivie d'une lame quart-d'onde 8 permettant de l'isoler optiquement, et d'un collimateur 9 conçu pour étendre le faisceau à un diamètre convenable. Ces composants appartiennent audit premier groupe.

Le deuxième groupe de composants est constitué de deux miroirs plans 10, 11, qui sont actionnés par un moteur sans balai à courant continu 12 et 13 respectivement, les axes de pivotement 14 et 15 respectivement de ces miroirs étant perpendiculaires l'un à l'autre, de façon que le faisceau 36 soit dirigé sur la cible dans un volume de travail dans lequel cette cible est autorisée à se déplacer. Les miroirs 10, 11 sont montés en porte-à-faux sur un arbre du moteur 12, 13 auquel on a accouplé en outre un codeur de l'angle d'arbre 16, 17. Des supports à gaz supportent l'arbre de part et autre du moteur 12, 13.

La fig. 3 montre un arrangement alternatif d'un miroir tel que 10′ du moteur correspondant 12′ et du codeur 16′. Dans ce cas, le miroir est disposé entre le moteur et le codeur sur un arbre commun qui est guidé entre deux supports à gaz 34, 35. Il est apparent qu'un tel arrangement est en mesure d'augmenter encore la stabilité mécanique du miroir et de réduire le risque d'oscillations de tangage de l'arbre commun.

Le troisième groupe de composants du sous-système est constitué par un détecteur à effet latéral 18 et par un séparateur de faisceaux 19, ce dernier étant interposé entre le collimateur 9 et les deux miroirs 10, 11. Des filtres (non représentés) sont disposés entre le séparateur de faisceau 19 et le photodétecteur en vue de couper la lumière ambiante.

Si les miroirs 10, 11 sont positionnés correctemennt, le fais ceau 37 est dirigé sur le réflecteur du type oeil de chat, qui constitue la cible 4 sur la tête du robot 1. Un réflecteur du type oeil de chat est un objet en verre composé de deux hémisphères de diamètres différents. La surface extérieure de l'hémisphère de plus grand diamètre réfléchit le faisceau de telle sorte que le faisceau de retour coincide avec le faisceau incident seulement si ce dernier traverse le centre des deux hémisphères. Dans les autres cas, l'oeil de chat réfléchit le faisceau parallèlement au faisceau incident, la distance entre les deux faisceaux dépendant de la distance de ce centre à laquelle le faisceau incident traverse le plan virtuel orthogonal au faisceau incident qui coupe le centre de l'hémisphère.

Pour que le faisceau laser 37 suive le centre de la cible 4, cette distance est mesurée dans le photodétecteur 18 à effet latéral, qui reçoit le faisceau de retour après son nouveau réfléchissement sur les deux miroirs 10 et 11 et après sa déviation de la voie principale dans le séparateur de faisceaux 19. Le photodétecteur à effet latéral 18 fournit des signaux sur ses quatres électrodes 20, 21, 22, 23 permettant de déceler la position du centre du faisceau sur la surface active du photodétecteur. Ces signaux sont alors utilisés pour fermer la boucle et pour activer les moteurs 12 et 13 des miroirs 10 et 11 de telle sorte que le faisceau frappe enfin le centre de l'oeil de chat. Dans ce cas, la distance entre le faisceau incident et le faisceau réfléchi devient zéro.

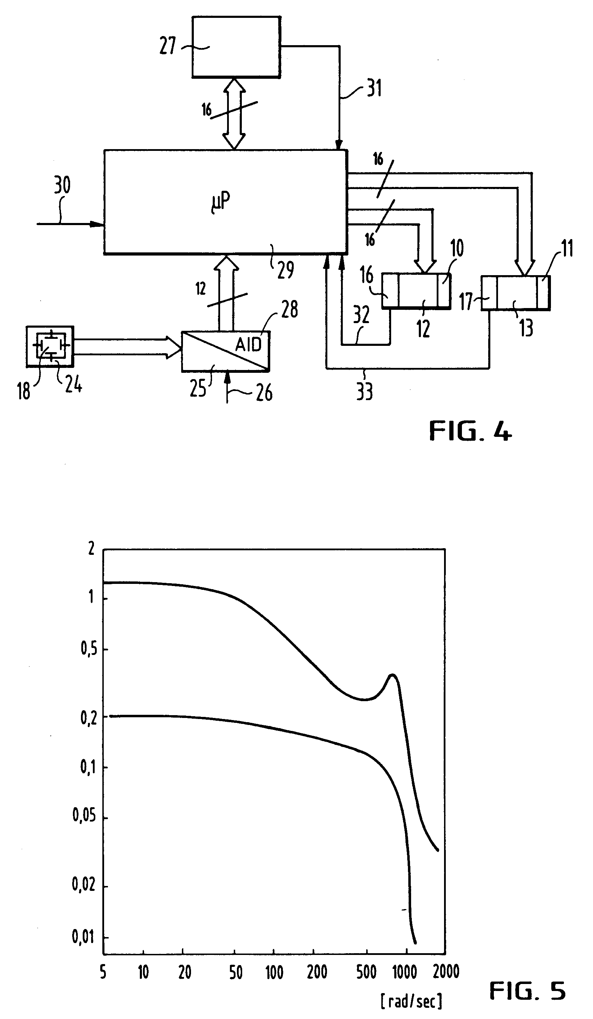

Le flux des signaux électriques dans cette boucle de contrôle est représenté sur la fig. 4.

Les signaux de sortie des détecteurs à effet latéral 18 sont amplifiés dans des amplificateurs 24 et sont appliqués à un circuit d'échantillonnage 25. Ce circuit reçoit en outre un signal de synchronisation 26 provenant d'un ordinateur principal 27. La sortie de ce circuit 25 est reliée à un convertisseur analogique-numérique 28, qui délivre la position actuelle du faisceau sous forme numérique à un microprocesseur 29.

Ce microprocesseur 29 reçoit en outre des signaux de commande manuelle par une ligne 30, un signal de synchronisation par une ligne 31 provenant de l'ordinateur 27, et les signaux numériques de positionnement délivrés par les codeurs 16 et 17 des deux miroirs 10 et 11.

Le microprocesseur 29 délivre des signaux de contrôle de positionnement pour les moteurs 12 et 13 en accord avec les signaux numériques indiquant la position du faisceau et délivrés par le convertisseur analogique-numérique 28, ainsi que les positions actuelles des miroirs fournies sous forme numérique par les lignes 32 et 33. Le microprocesseur comporte un dispositif de contrôle état-espace qui est conçu pour éliminer des oscillations du système comprenant les miroirs, les moteurs et leurs amplificateurs de puissance.

Les positions actuelles des miroirs et la position actuelle du faisceau sont en outre signalées à l'ordinateur principal 27, qui en déduit les coordonnées dans l'espace du point central de l'oeil de chat.

Il est à noter ici que pour une poursuite correcte de la tête, il n'est pas nécessaire que le faisceau passe exactement par le centre de l'oeil de chat. La distance entre le point d'incidence du faisceau et le centre de l'oeil de chat étant continuellement mesurée par les détecteurs à effet latéral et étant disponible dans le microprocesseur 29, la triangulation peut avoir lieu, même si le faisceau ne traverse pas exactement le centre de l'oeil de chat. Cela facilite le contrôle de la position de miroir.

La fig. 5 représente une réponse typique de fréquence d'un système moteur à miroir comprenant le miroir, son moteur et ses amplificateurs de puissance. La fréquence en rad/seconde est affichée sur l'abscisse et le rapport d'amplitude en ordonnée. La courbe supérieure constitue la réponse de fréquence sans dispositif de contrôle dynamique d'état-espace, alors que la courbe inférieure représente la réponse obtenue grâce à ce dispositif de contrôle. On peut voir que la réponse est très plate et qu'elle est dépourvue de tout phénomène de résonance.

L'avantage du système selon l'invention par rapport au système connu de poursuite d'une tête de robot est appréciable. Il devrait être possible de poursuivre une tête de robot à une précision de position de ± 0,5 mm dans un volume de travail jusqu'à 1 m³, la vitesse maximale de la tête du robot étant 5 m/sec.

Malgré cette performance élevée du système selon l'invention, il est toujours possible que la poursuite de la tête du robot soit perdue, par exemple suite à un effet d'ombrage. Si le faisceau n'illumine plus l'oeil de chat, la boucle de contrôle pour le positionnement du miroir doit être interrompue, et une phase de recherche à boucle ouverte doit être parcourue. Cela peut être une recherche manuelle, mais il est plus approprié d'utiliser les facilités existantes de calcul numérique en vue de programmer une procédure automatique de recherche et d'activer cette procédure automatiquement dès que le détecteur à effet latéral ne produit plus de signaux. Ce mode de recherche automatique est de nouveau abandonné dès que le faisceau de retour passe par la zone photosensible du détecteur. Le temps de recherche est typiquement d'une ou de deux secondes.

## Revendications

1. Système de poursuite d'une cible, comprenant deux sous-systèmes (5, 6) identiques, fixes et distancés, chaque sous-système comportant une source laser (7) et deux miroirs (10, 11) à pivotement orthogonal, de telle sorte qu'un faisceau laser (37) puisse être dirigé par chaque sous-systéme vers cette cible (4) en mouvement, comportant en outre chacun un détecteur (18) sensible à la lumière laser et recevant le faisceau de lumière après réflexion sur la cible (4), la position de pivotement des miroirs (10, 11) étant ajustable sous contrôle de signaux dérivés du détecteur respectif (18), contrôle tel que le faisceau considéré ait tendance à s'approcher du centre de la cible (4) et à être réfléchi sur lui-même, le système comportant en outre des moyens (16, 17) pour détecter la position instantanée des miroirs, et des moyens de calcul (fig. 4) évaluant les coordonnées 3D instantanées de la cible à base des positions des miroirs, caractérisé en ce que chaque miroir (10, 11) de chaque sous-système (5, 6) est pivoté par un moteur à courant continu et sans balai (12, 13), que l'arbre commun de pivotement du moteur er du miroir entraîne en plus un codeur numérique d'angle (16, 17) et que la cible (4) est une cible réfléchissante du type oeil de chat.

2. Système de poursuite d'une cible selon la revendication 1, caractérisé en ce que le codeur d'angle (16, 17) est disposé à proximité du moteur associé (12, 13).

3. Système de poursuite d'une cible selon la revendication 1, caractérisé en ce que chaque miroir (10$'$) est disposé sur un arbre entre son moteur (12$'$) et son codeur (16$'$) associés.

4. Système de poursuite d'une cible selon l'une des revendications 1 à 3, caractérisé en ce que les deux moteurs sans balai à courant continu (12, 13) destinés à entraîner les miroirs (10, 11) de chaque sous-système (5 ou 6) sont contrôlés par des signaux numériques qui sont calculés en accord avec les signaux de sortie du détecteur (18) et avec un signal d'erreur dépendant de la différence instantanée entre la position instantanée du miroir et la position requise du miroir.

5. Système de poursuite d'une cible selon l'une des revendications précédentes, caractérisé en ce que le détecteur (18) de chaque sous-système est constitué par un photodétecteur à effet latéral fournissant des signaux en fonction des coordonnées orthogonales du centre du faisceau incident de lumière.

6. Systeme de poursuite de cible selon l'une des revendications précédentes, caractérisé en ce que chaque sous-système comporte un dispositif de contrôle de mode qui distingue au moins entre le mode normal de poursuite et un mode de recherche automatique dans lequel les miroirs sont pivotés en accord avec un programme prédéterminé, la transition entre les modes étant contrôlée par le signal de sortie du détecteur.

7. Système de poursuite d'une cible selon l'une des revendications précédentes, caractérisé en ce que les signaux de contrôle pour le pivotement des miroirs dans chaque sous-système sont soumis à un dispositif de contrôle état-espace conçu pour éliminer des résonances du miroir et de ses amplificateurs de puissance.

## Claims

1. A target tracking system comprising two identical stationary and mutually distant sub-systems (5, 6), each sub-system including a laser source (7) and two orthogonally pivotable mirrors (10, 11) such that a laser beam (37) can be directed by each sub-system towards this target (4), each sub-system further including a laser light sensitive detector (18) receiving the light beam after its reflection on the target (4), the pivot position of the mirrors (10, 11) being adjustable under the control of signals derived from the respective detector (18), such that the respective beam tends to approach the centre of the target (4) and to be reflected in itself, the system further comprising means (16, 17) for detecting the instantaneous position of the mirrors, and calculator means (Figure 4) evaluating the instantaneous 3D coordinates of the target on the basis of the mirror pivot positions, characterized in that in each sub-system (5, 6), each mirror (10, 11) is pivoted by a brushless DC motor (12, 13), that the common pivot shaft of the motor and the mirror further drives a digital angle encoder (16, 17) and that the target (4) is a reflecting target of the cat's eye type.

2. A target tracking system according to claim 1, characterized in that the angle encoder (16, 17) is located close to the associated motor (12, 13).

3. A target tracking system according to claim 1, characterized in that each mirror (10') is located on a shaft between its corresponding motor (12') and encoder (16').

4. A target tracking system according to one of claims 1 to 3, characterized in that the two brushless DC motors (12, 13) for driving the mirrors (10, 11) of each sub-system (5 or 6) are controlled by digital signals which are calculated in accordance with the output signals of the detector (18), and with an error signal depending on the instantaneous difference between the instantaneous mirror position and the requested mirror position.

5. A target tracking system according to any one of the preceding claims, characterized in that the detector (18) of each sub-system is constituted by a lateral effect photodetector supplying signals representative of the orthogonal coordinates of the centre of the incident light beam.

6. A target tracking system according to any one of the preceding claims, characterized in that each sub-system includes a mode control device distinguishing at least between the normal tracking mode and an automatic search mode in which the mirrors are pivoted according to a predetermined program, the transition between the modes being controlled by the detector output signal.

7. A target tracking system according to any one of the preceding claims, characterized in that the mirror pivot control signals of each subsystem are submitted to a state-space device conceived to eliminate resonances of the mirror and of the power amplifiers of the system.

**Patentansprüche**

1. System zur Verfolgung eines Ziels, das zwei identische, feststehende und mit Zwischenabstand angeordnete Untersysteme (5, 6) aufweist, wobei jedes Untersystem eine Laserquelle (7) und zwei orthogonal schwenkbare Spiegel (10, 11) besitzt, derart, daß ein Laserstrahl (37) von jedem Untersystem auf das bewegte Ziel (4) gerichtet werden kann, und daß jedes Untersystem weiter einen für Laserlicht empfindlichen Detektor (18) aufweist, der den Lichtstrahl nach Reflexion am Ziel (4) empfängt, wobei die Schwenkposition der Spiegel (10, 11) unter der Kontrolle von Signalen einstellbar ist, die vom jeweiligen Detektor (18) stammen, wobei die Kontrolle so erfolgt, daß der betrachtete Strahl dahin tendiert, sich dem Zentrum des Ziels (4) zu nähern und auf sich selbst zurückgeworfen zu werden, und wobei das System weiter Mittel (16, 17) zur Erfassung der Momentanposition der Spiegel sowie Rechenmittel (Figur 4) zur Abschätzung der 3D-Momentankoordinaten des Ziels auf Basis der Spiegelposition aufweist, dadurch gekennzeichnet, daß jeder Spiegel (10, 11) jedes Untersystems (5, 6) durch einen bürstenlosen Gleichstrommotor (12, 13) geschwenkt wird, daß die gemeinsame Schwenkwelle des Motors und des Spiegels zusätzlich einen digitalen Winkelkodierer (16, 17) antreibt und daß das Ziel (4) ein reflektierendes Ziel vom Katzenaugentyp ist.

2. Zielverfolgungssystem nach Anspruch 1, dadurch gekennzeichnet, daß der Winkelkodierer (16, 17) in der Nähe des zugehörigen Motors (12, 13) angeordnet ist.

3. Zielverfolgungssystem nach Anspruch 1, dadurch gekennzeichnet, daß jeder Spiegel (10') auf einer Welle zwischen seinem Motor (12') und seinem zugehörigen Kodierer (16') angeordnet ist.

4. Zielverfolgungssystem nach einem der Ansprüche 1 bis 3, dadurch gekennzeichnet, daß die für den Antrieb der Spiegel (10, 11) jedes Untersystems (5 oder 6) bestimmten beiden bürstenlosen Gleichstrommotoren (12, 13) durch Digitalsignale gesteuert werden, die in Übereinstimmung mit den Ausgangsignalen des Detektors (18) und mit einem Fehlersignal berechnet werden, das vom Momentanunterschied zwischen der Momentanposition des Spiegels und der geforderten Position des Spiegels abhängt.

5. Zielverfolgungssystem nach einem der vorhergehenden Ansprüche, dadurch gekennzeichnet, daß der Detektor (18) jedes Untersystems aus einem Seiteneffekt-Photodetektor besteht, der Signale in Abhängigkeit von den orthogonalen Koordinaten des Zentrums des einfallenden Lichtstrahls liefert.

6. Zielverfolgungssystem nach einem der vorhergehenden Ansprüche, dadurch gekennzeichnet, daß jedes Untersystem eine Einrichtung zur Steuerung des Modus aufweist, die mindestens zwischen dem normalen Verfolgungsmodus und einem automatischen Suchmodus unterscheidet, bei dem die Spiegel gemäß einem vorbestimmten Programm geschwenkt werden, wobei der Übergang zwischen den Moden durch das Ausgangssignal des Detektors gesteuert wird.

7. Zielverfolgungssystem nach einem der vorhergehenden Ansprüche, dadurch gekennzeichnet, daß die Steuersignale für das Schwenken der Spiegel jedes Untersystems der Behandlung durch eine Einrichtung für die Zustands-Raumkontrolle unterzogen werden, und zwar für die Beseitigung der Resonanzen des Spiegels und der Leistungsverstärker des Systems.

FIG. 1

FIG. 2

FIG. 3

FIG. 4

[rad/sec]

FIG. 5